# EUROPEAN PATENT SPECIFICATION

(11) **EP 3 017 921 B1**
(45) Date of publication and mention of the grant of the patent: **16.10.2019**
(21) Application number: 13888568.6
(22) Date of filing: 04.07.2013
(51) Int. Cl.: B25J 17/00, B25J 18/00, B25J 9/10, B25J 9/12, B25J 9/00

(54) **ROBOT, ARM STRUCTURE FOR ROBOT, AND ACTUATING DEVICE**
ROBOTER, ARMSTRUKTUR FÜR ROBOTER UND BETÄTIGUNGSVORRICHTUNG
ROBOT, STRUCTURE DE BRAS POUR ROBOT, ET DISPOSITIF D'ACTIONNEMENT

(43) Date of publication of application: 11.05.2016
(73) Proprietor: Kabushiki Kaisha Yaskawa Denki, Kitakyushu-shi, Fukuoka 806-0004 (JP)
(72) Inventor: SAITO, Hiroshi, Kitakyushu-shi Fukuoka 806-0004 (JP); ICHIBANGASE, Atsushi, Kitakyushu-shi Fukuoka 806-0004 (JP); TANAKA, Kentaro, Kitakyushu-shi Fukuoka 806-0004 (JP)
(74) Representative: Grünecker Patent- und Rechtsanwälte PartG mbB
(86) International application number: PCT/JP2013/068373
(87) International publication number: WO 2015/001643

(56) References cited:
- WO-A1-2012/104785
- JP-A- H10 329 079
- JP-A- H10 329 079
- JP-A- S61 152 381
- JP-A- S62 140 794
- JP-A- S62 140 794
- JP-A- 2001 277 176
- JP-A- 2001 277 176
- JP-B2- 4 291 344

## Description

### Field

The embodiment of the disclosure relates to a robot, a robot arm structure, and a driving device. Background

Conventionally, robots with an arm part that has a plurality of arms rotatably connected via joints have been known in the art. Some of such robots include their arms having a hollow structure so that cables and the like are arranged inside the arm part, for example.

Rotation shafts, rotation transmission mechanisms, and the like for the arms and a wrist are arranged inside the hollow arms. The joints or the like are loaded with driving devices that have motors serving as drive sources to rotate the arms and the wrist (e.g., see Patent Literature 1).

The driving device loaded onto the 'industrial robot' disclosed in Patent Literature 1 drives one axis of an arm by using a plurality of motors. In other related art,

Patent Literature 2 discloses a drive apparatus for a robotic manipulator. The drive apparatus includes a plurality of prime movers which are mounted on a base. The drive apparatus further includes a concentric gear drive including a plurality of gears which are independently rotatable about a common axis. Output gears of a prime movers mesh with the concentric gears in order to drive the concentric gears in rotation about the common axis. Drive transfer mechanisms, which have input gears driven by output gears in the concentric gear drive, are arranged to drive a driven component such as an end effector.

### Citation List

### Patent Literature

Patent Literature 1: Japanese Patent No. 4291344
Patent Literature 2: International Publication No. WO 2012/104785 A1

### Summary

### Technical Problem

However, the conventional art of Patent Literature 1, mentioned above, further has room for improvement in having the robot shaped into a slimmer appearance, yet securing hollow regions inside its arms.

Specifically, under the recent circumstances where multi-axis robots with multiple axes have been widely used, the inside of the above-mentioned hollow arms requires space where the rotation shafts and the rotation transmission mechanisms for multiple axes are arranged, and thus it becomes difficult to secure the hollow region where the cables and the like are arranged.

The requirements for the drive sources for multiple axes are easy to increase the arrangement space of the driving device. Hence, the arm part and thus the robot, as a whole, are unavoidably increased in dimensions. Such an increase in dimensions of the robot is not desirable because the robot during operation is easy to interfere with other instruments and the like.

An aspect of the embodiment has been achieved in the light of the aforementioned, and it is an object of the embodiment to provide a robot, a robot arm structure, and a driving device, in which its arm can be shaped in a slimmer appearance, yet securing a hollow region inside therein. Solution to Problem

The present invention provides a driving device according to claim 1. Preferred embodiments are set out in the dependent claims. A robot according to an aspect of an embodiment includes a driving body including a driving device that drives a driven body. The driving device includes a plurality of hollow shafts and a plurality of driving units. The plurality of hollow shafts are disposed concentrically. The plurality of driving units are disposed along a circumferential direction of the hollow shafts. The output shafts of the driving units are connected to the hollow shafts via gears.

### Advantageous Effects of Invention

According to the aspect of the embodiment, the driving body can be shaped in a slimmer appearance, yet securing the hollow region inside therein.

### Brief Description of Drawings

FIG. 1 is a perspective schematic view illustrating a structure of a robot according to an example which is not claimed but nonetheless useful for understanding the present invention.
FIG. 2A is a transparent plan view illustrating a second arm not belonging to the invention
FIG. 2B is an enlarged view illustrating a driving device not belonging to the invention and the surrounding of the same shown in FIG. 2A.
FIG. 3A is a schematic sectional view taken along the line A - A of FIG. 2B.
FIG. 3B is a transparent side view illustrating the second arm not belonging to the invention
FIG. 4A is a schematic plan view illustrating a first driving unit according to an embodiment.
FIG. 4B is a schematic view illustrating the first driving unit according to the embodiment when viewed along an arrow C.
FIG. 5A is a transparent plan view illustrating the second arm including the driving device according to the embodiment.
FIG. 5B is a schematic sectional view taken along the line A'-A' of FIG. 5A.

### Description of Embodiment

With reference to the accompanying drawings, an embodiment of a robot, a robot art structure, and a driving device will now be described in detail below. It should not be interpreted that the present embodiment is limited to the embodiment set forth below.

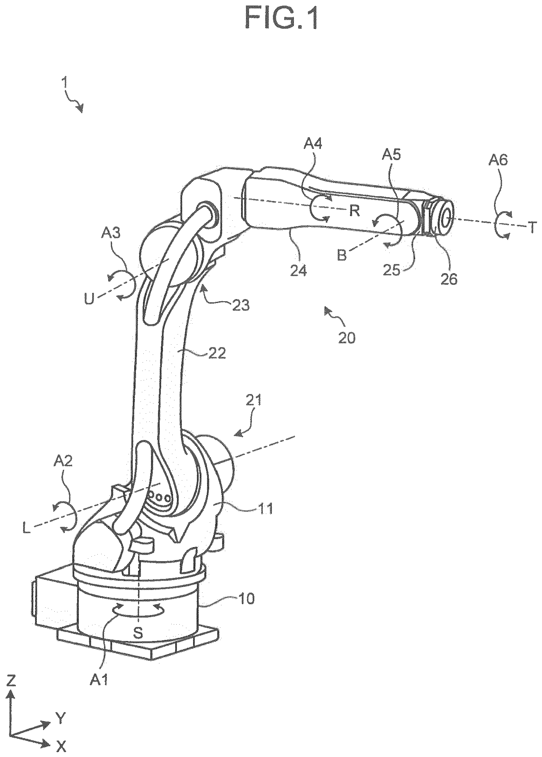

FIG. 1 is a perspective schematic view illustrating a structure of a robot 1 according to an related example which is not claimed but nonetheless useful for understanding the present invention. For the purpose of providing easy-to-understand explanations, FIG. 1 illustrates three-dimensional Cartesian coordinates with the Z-axis along which the vertically upward direction designates a positive direction. Such Cartesian coordinates are used as required in some other drawings in conjunction with the following explanation.

In the following explanation, simply for the convenience of explanation, positional relations of components in the robot 1 will be described on the assumption that the swiveled position of the robot 1 is just as illustrated in FIG. 1.

As illustrated in FIG. 1, the robot 1 is a single-arm multi-axis robot, and includes a base 10, a pivoting part 11 pivotably connected to the base 10, and an arm part 20. The arm part 20 includes arms, a wrist, a distal movable unit, and the like, the arms being rotatably connected via joints.

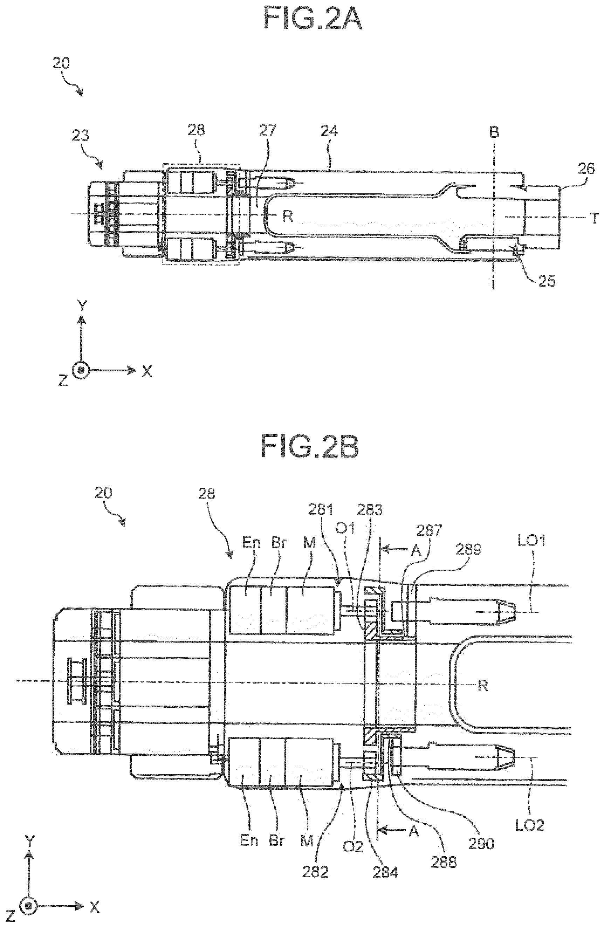

Specifically, the arm part 20 includes a first joint 21, a first arm 22, a second joint 23, a second arm 24, a wrist 25, and a distal movable unit 26. The first joint 21 and the second joint 23 are joints described simply by way of example, and the details about them will be discussed with reference to FIG. 2A and the next drawings.

The base 10 is fixed to a floor surface or the like. The first arm 22 has its proximal end connected to the pivoting part 11 via the first joint 21. This enables the first arm 22 to be supported at its proximal end pivotably around axis S and rotatably around axis L (see arrows A1 and A2 in the drawing).

The second arm 24 has its proximal end connected to a distal end of the first arm 22 via the second joint 23. This enables the second arm 24 to be supported at its proximal end rotatably around axis U (see an arrow A3 in the drawing). Also, the second arm 24 is provided to be rotatable around axis R (see an arrow A4 in the drawing).

Additionally, the second arm 24, at its distal end, supports a proximal end of the wrist 25 to be rotatable around axis B (see an arrow A5 in the drawing).

Furthermore, the wrist 25, at its distal end, supports the distal movable unit 26 so as to be rotatable around axis T (see an arrow A6 in the drawing). Although not shown in FIG. 1, an end-effector according to the use is attached to the distal movable unit 26. The end-effector includes, for example, a robot hand, a welding torch, a laser cutter, or the like.

An inner structure of the arm part 20 will be described. By way of example not belonging to the invention, a structure, primarily, of the second arm 24 will be described with reference to FIG. 2A and FIG. 2B. FIG. 2A is a transparent plan view illustrating the second arm 24. FIG. 2B is an enlarged view illustrating a driving device 28 and the surrounding of the same shown in FIG. 2A.

As shown in FIG. 2A, the second arm 24 is a hollow arm having a hollow part 27 inside. The hollow part 27 is an example of a hollow region. The hollow part 27 is formed to be communicated with the second joint 23 so as to permit cables to be pulled therein from the second joint 23 or the like.

The second arm 24 is provided with the driving device 28 that rotates the wrist 25, the distal movable unit 26, and the like. The driving device 28 is disposed around the hollow part 27. In this case, the second arm 24 is a driving body, and the wrist 25 or the distal movable unit 26 is a driven body.

The driving device 28 and the surrounding will be further specifically described. As shown in FIG. 2B, the driving device 28 includes a first driving unit 281 and a second driving unit 282. The first driving unit 281 and the second driving unit 282 include, for example, their respective motors M, brakes Br, and encoders En. The brakes and encoders are disposed concentrically with the respective motors M. The motors M are not limited to electrical motors, but may be motors such as hydraulic motors.

The first driving unit 281 has an output shaft O1. The second driving unit 282 has an output shaft O2.

The driving device 28 includes a first hollow shaft 283 and a second hollow shaft 284. The first hollow shaft 283 and the second hollow shaft 284 are disposed concentrically with each other. In the example, the second hollow shaft 284 is disposed outside of the first hollow shaft 283.

Herein, the first hollow shaft 283 and the second hollow shaft 284 are arranged concentrically with the center of axis R. However, the axis is not limited to the axis R. The 'concentric arrangement' described herein includes any arrangement in which the centers of the shafts slightly deviate from each other, for example, within a range that is acceptable by geometric tolerance.

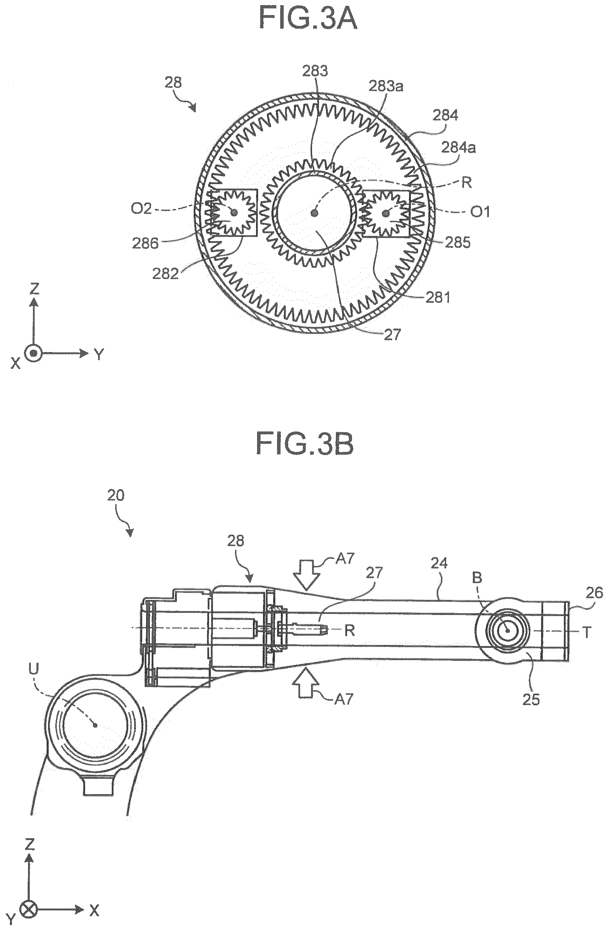

A structure of connections that connect the first and second hollow shafts 283 and 284 with the first and second driving units 281 and 282, and the effect resulting from such a structure will now be described with reference to FIG. 3A and FIG. 3B.

FIG. 3A is a schematic sectional view taken along the line A-A of FIG. 2B. FIG. 3B is a transparent side view illustrating the second arm 24.

As has been described above, and, as can be seen in FIG. 3A, the first hollow shaft 283 and the second hollow shaft 284 are arranged concentrically with the center of the axis R. The first driving unit 281 and the second driving unit 282 are disposed along a circumferential direction of the first hollow shaft 283 and the second hollow shaft 284. This can, above all, result in securing the hollow part 27.

Also, as shown in FIG. 3A, the first hollow shaft 283 has external teeth 283a formed at its outer circumference. The output shaft O1 of the first driving unit 281 has a gear 285 that is engaged with the external teeth 283a. With the gear 285 and the external teeth 283a being engaged together, the output shaft 01 of the first driving unit 281 is connected with the first hollow shaft 283.

Meanwhile, the second hollow shaft 284 has internal teeth 284a at its inner circumference. The output shaft 02 of the second driving unit 282 also has a gear 286 that is engaged with the internal teeth 284a. With the gear 286 and the internal teeth 284a being engaged together, the output shaft 02 of the second driving unit 282 is connected with the second hollow shaft 284.

The above-mentioned connections structured in this manner can bring about a compact accommodation of the drive sources, the rotation shafts, and the rotation transmission mechanisms for the multiple axes, at the periphery of the hollow part 27. Thus, as can be seen in FIG. 3B by way of example, a casing of the second arm 24 can be thinned down tightly (see arrows A7 in the drawing), yet securing the hollow part 27 inside. In other words, the second arm 24 can be shaped in a slimmer appearance, yet securing the hollow region inside.

Referring back to FIG. 2B, the discussion will be continued. As shown in FIG. 2B, the first hollow shaft 283 further has a tooth surface 287. The arm part 20 includes a gear 289 that is engaged with the tooth surface 287. Thus, with the gear 289 being engaged with the tooth surface 287, the power derived from the first driving unit 281 is consequently output from a final output shaft LO1.

Meanwhile, the second hollow shaft 284 further has a tooth surface 288. The second arm 24 includes a gear 290 that is engaged with the tooth surface 288. Thus, with the gear 290 being engaged with the tooth surface 288, the power derived from the second driving unit 282 is consequently output from a final output shaft LO2.

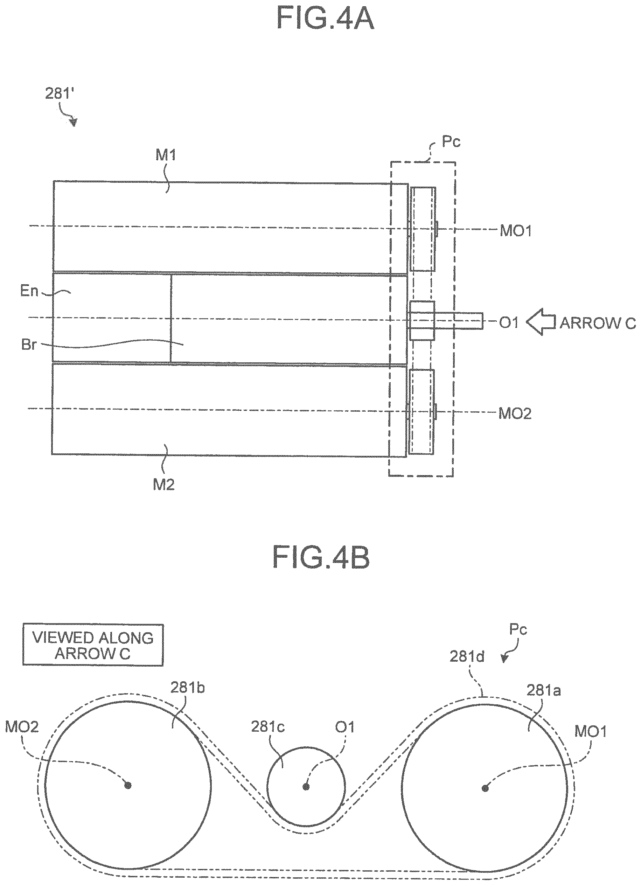

The example where each of the first driving unit 281 and the second driving unit 282 includes the single motor M has been described so far. However, in case the output power of the first driving unit 281 or the second driving unit 282 should be increased, the corresponding driving unit may include two or more motors M. Such a modification will now be described, with reference to FIG. 4A to FIG. 5B, and constitutes an embodiment of the present invention.

FIG. 4A is a schematic plan view illustrating a first driving unit 281' according to the embodiment. FIG. 4B is a schematic view illustrating the first driving unit 281' according to the embodiment when viewed along an arrow C. Although FIG. 4A and FIG. 4B illustrate primarily the first driving unit 281' by way of example, a second driving unit 282' may have the same configuration as the first driving unit 281' in the embodiment.

As shown in FIG. 4A, the first driving unit 281' according to the embodiment includes a first motor M1, a second motor M2, a brake Br, an encoder En, and a power coupling unit Pc.

The first motor M1 is provided with an output shaft MO1. The second motor M2 is provided with an output shaft MO2. The brake Br and the encoder En are connected to the output shaft O1 of the first driving unit 281' so that rotation shafts of them are arranged concentrically with the output shaft O1. The connected brake Br and encoder En are referred collectively to as 'brake-encoder unit' hereinafter on some occasion.

The first motor M1, the second motor M2, and the brake-encoder unit provided separately can be located in a side-by-side arrangement, as shown in FIG. 4A by way of example. That is to say, the first driving unit 281' can be reduced in height, or in other words, can be a thinned unit.

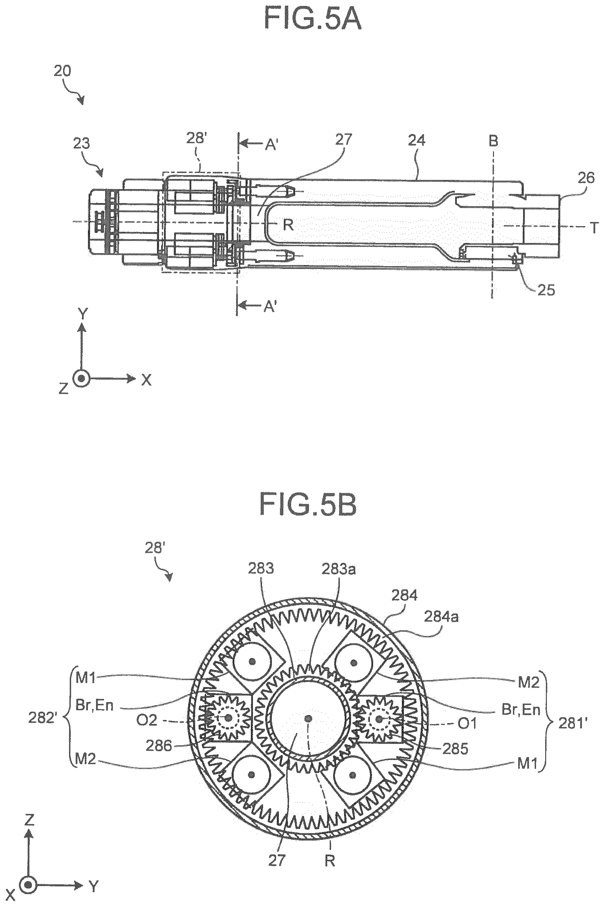

Furthermore, because the first motor M1, the second motor M2, and the brake-encoder unit are separated from one another, they can be arranged in accordance with the shape of the configuration space or the like without being limited to the side-by-side arrangement. For instance, they may be arranged along the circumferential direction of the first hollow shaft 283 and the second hollow shaft 284. An example of such an arrangement will be described later, referring to FIG. 5A and FIG. 5B.

As illustrated in FIG. 4B, the power coupling unit Pc includes a first pulley 281a, a second pulley 281b, a third pulley 281c, and a belt 281d.

The first pulley 281a is connected to the output shaft MO1 of the first motor M1. The second pulley 281b is connected to the output shaft MO2 of the second motor M2. The third pulley 281c is connected to the output shaft 01 of the first driving unit 281'.

The first pulley 281a, the second pulley 281b, and the third pulley 281c are linked together by the belt 281d in such a manner as shown in FIG. 4B by way of example. In this manner, the power derived from the first motor M1 and the second motor M2 can be transmitted to the output shaft 01 of the first driving unit 281' and further output from the output shaft 01.

In the event that each of the first motor M1 and the second motor M2 has the identical rated power of 50W (Watts), the resultant power of 100W can be obtained from the output shaft O1 of the first driving unit 281'. That is to say, the driving unit can be thinned, its components can be arranged in accordance with the shape of the configuration space or the like, and the driving unit can still gain a high output power.

Also, as shown in FIG. 4B, in comparison with the first pulley 281a and the second pulley 281b, the third pulley 281c is formed with a reduced pulley ratio, thereby enabling the rotations of the first motor M1 and the second motor M2 to be transmitted to the rotation shaft of the brake-encoder unit with increased speed.

Thus, a brake capacity of the brake Br can be reduced, or the brake Br can have compact structure. The encoder En can detect the rotations of the first motor M1 and the second motor M2 at high resolution.

Hereinafter, the driving device loaded with the first driving unit 281' (and the second driving unit 282') described in conjunction with FIG. 4A and FIG. 4B will be denoted by the reference numeric symbol "28'".

Then, an exemplary case where the driving device is loaded with the first driving unit 281' and the second driving unit 282' will be set forth. FIG. 5A is a transparent plan view illustrating the second arm 24 including the driving device 28' according to the embodiment. FIG. 5B is a schematic sectional view taken along the line A'-A' shown in FIG. 5A.

Because FIG. 5A corresponds to FIG. 2A and FIG. 5B corresponds to FIG. 3A, explanations for overlapped components are sometimes omitted or otherwise simplified.

As shown in FIG. 5A, the second arm 24 can mount therein the driving device 28', yet securing the hollow part 27.

Specifically, as shown in FIG. 5B, the first driving unit 281' and the second driving unit 282' are arranged along the circumferential direction of the first hollow shaft 283 and the second hollow shaft 284 that are disposed concentrically with the center of axis R.

For instance, the first driving unit 281' is placed at the side opposed to the second driving unit 282' while placing the hollow part 27 therebetween, i.e., is placed at the right side in the drawing. Moreover, the first motor M1 and the second motor M2 are respectively arranged at the lower and upper sides, and the brake-encoder unit (see the reference alphanumeric symbols Br and En) connected to the output shaft O1 is placed at the middle between them.

Although not shown in that drawing, the first pulley 281a, the second pulley 281b, and the third pulley 281c are linked together by the belt 281d (see FIG. 4B).

On the other hand, as shown in FIG. 5B, the second driving unit 282' is placed at the side opposed to the second driving unit 282' while placing the hollow part 27 therebetween, i.e., is placed at the left side in the drawing. Moreover, the first motor M1 and the second motor M2 are respectively arranged at the upper and lower sides, and the brake-encoder unit connected to the output shaft 02 is placed at the middle between them.

Although not shown in the drawing, similar to the first driving unit 281', in the second driving unit 282', the first pulley 281a, the second pulley 281b, and the third pulley 281c are linked together by the belt 281d (see FIG. 4B).

In this manner, the high-power drive sources, the rotation shafts, and the rotation transmission mechanisms can be accommodated in a compact arrangement around the hollow part 27. Thus, as shown in FIG. 3B, for instance, a frame of the second arm 24 can be thinned down tightly, yet securing the hollow part 27. In other word, the second arm 24 can be shaped in a slimmer appearance, yet securing the hollow region inside.

Although the description in conjunction with FIG. 4A to FIG. 5B provides the exemplary arrangement where the brake-encoder unit is disposed between the first motor M1 and the second motor M2, the embodiment is not limited to this, and alternatively, the brake-encoder unit may be placed in an end.

Also, the manner in which the belt 281d links the components in the power coupling unit Pc is not limited to the example shown in FIG. 4B, but may be replaced with any alternative if the alternative can correspond to relative arrangement between the first motor M1, the second motor M2, and the brake-encoder unit En.

In other words, the positions of the output shafts O1 and 02 of the first and second driving units 281' and 282' can be freely arranged depending on the relative arrangement between the first motor M1, the second motor M2, and the brake-encoder En and/or the linkage manner of the belt 281d.

As has been described, the robot according to the embodiment includes a driving body that includes a driving device that drives a driven body. The driving device includes a plurality of hollow shafts and driving units. The plurality of hollow shafts are concentrically arranged one another. The driving units are disposed along the circumferential direction of the hollow shafts. Output shafts of the driving units are connected with the hollow shafts via gears.

Thus, in the robot according to the embodiment, the second arm can be shaped in a slimmer appearance, yet securing its hollow region inside.

In the aforementioned embodiment, there has been described the exemplary case where the two driving units, namely, the first and second driving units are connected to the two concentric hollow shafts via the gears, in other words, the case where the final output shaft corresponding to two shafts is obtained. However, the number of shafts of the final output shaft is not limited to the case.

For example, if desired to have the final output shaft corresponding to three shafts, it is sufficient that three driving units are disposed along the circumferential direction of three concentric hollow shafts and are respectively connected to the three hollow shafts via the gears.

Also, in the aforementioned embodiment, there has been described the exemplary case where the first and second driving units are respectively arranged at right and left sides in the drawing while placing the hollow region therebetween (see FIG. 3A or FIG. 5B). However, it is not intended to limit the arrangement of the driving units.

For example, the first and second driving units may be respectively arranged at upper and lower sides in the drawing while placing the hollow region therebetween.

Further, although, in the aforementioned embodiment, the exemplary engagement of the gears in the driving device is depicted in FIG. 3A or FIG. 5B, both the drawings are not intended to limit the number of teeth of the actual gear. The drawings are also not intended to limit the shape of the teeth of the gear, and thus the shape of the teeth can be appropriately selected in accordance to desired specifications of spur gears, helical gears, and the like.

Moreover, in the aforementioned embodiment, there has been described the example where the brake and the encoder are disposed in a concentric arrangement. However, they may not necessarily be concentric.

Furthermore, although the aforementioned embodiment is described by primarily using the second arm as the example, there is no intention to limit arms that constitute the arm part. Thus, the aforementioned embodiment may be applied to the first arm. In such a case, the first arm is a driving body, and the second arm is a driven body. The aforementioned embodiment may be applied to the pivoting part. In such a case, the pivoting part is a driving body, and the first arm is a driven body.

Also, in the aforementioned embodiment, there has been described an exemplary case where the single arm part has two arms, namely, the first arm and the second arm. However, the number of the arms is not limited to two.

Moreover, in the aforementioned embodiment, there has been described the example of the multi-axis robot where one arm part has six axes. However, it is not intended to limit the number of the axes. For example, the multi-axis robot may have seven axes.

Also, although the aforementioned embodiment is described by using the single arm robot as the example, it is not intended to be limited to this. The robot may be a dual-arm robot, or a multi-arm robot that includes three or more arm parts.

### Reference Signs List

- 1: Robot
- 10: Base
- 11: Pivoting Part
- 20: Arm Part
- 21: First Joint
- 22: First Arm
- 23: Second Joint
- 24: Second Arm
- 25: Wrist
- 26: Distal Movable Unit
- 27: Hollow Part
- 28: Driving Device
- 281: First Driving Unit
- 281a: First Pulley
- 281b: Second Pulley
- 281c: Third Pulley
- 281d: Belt
- 282: Second Driving Unit
- 283: First Hollow Shaft
- 283a: External teeth
- 284: Second Hollow Shaft
- 284a: Internal teeth
- 285: Gear
- 286: Gear
- 287: Tooth Surface
- 288: Tooth Surface
- 289: Gear
- 290: Gear
- A to A7: Arrows
- B: Axis
- Br: Brake
- En: Encoder
- L: Axis
- LO1, LO2: Final Output Shaft
- M: Motor
- M1: First Motor
- M2: Second Motor
- MO1, MO2: Output Shaft
- O1, O2: Output Shaft
- Pc: Power Coupling Unit
- R: Axis
- S: Axis
- T: Axis
- U: Axis

## Claims

1. A driving device (28, 28') comprising:
a plurality of hollow shafts (283, 284) disposed concentrically; and
a plurality of driving units (281, 282; 281', 282') disposed along a circumferential direction of the hollow shafts (283, 284),
wherein output shafts (O1, 02) of the driving units (281, 282; 281', 282') are connected to the hollow shafts (283, 284) via gears,
wherein the plurality of hollow shafts (283,284) include(s)
a first hollow shaft (283) having external teeth (283a) at its outer circumference, and
a second hollow shaft (284) disposed outside the first hollow shaft (283) and having internal teeth (284a) at its inner circumference,
wherein the plurality of driving units (281, 282; 281', 282') include(s)
a first driving unit (281; 281') of which the output shaft (O1) has a gear engaged with the external teeth (283a) and
a second driving unit (282) of which the output shaft (02) has a gear engaged with the Internal teeth (284a),
wherein at least one of the driving units (281', 282') includes:
a plurality of motors (M1, M2); and
a power coupling unit (Pc) coupling powers from the plurality of motors (M1, M2) to enable the output shaft (O1, 02) to output the coupled powers, and
wherein the plurality of motors (M1, M2) are arranged along the circumferential direction of the hollow shafts (283, 284).

2. The driving device (28; 28') according to claim 1, wherein
the power coupling unit (Pc) is composed of a combination of pulleys and a belt.

3. A robot (1) comprising
a driving body (24) including the driving device (28; 28') according to claim 1 or 2, wherein the driving device (28; 28') drives a driven body (25, 26).

4. A robot arm structure comprising
the driving device (28; 28') according to claim 1 or 2.

## Patentansprüche

1. Antriebsvorrichtung (28, 28') umfassend:
eine Vielzahl von konzentrisch angeordneten Hohlwellen (283, 284); und
eine Vielzahl von entlang einer Umfangsrichtung der Hohlwellen (283, 284) angeordneten Antriebseinheiten (281, 282; 281', 282'),
wobei Abtriebswellen (O1, 02) der Antriebseinheiten (281, 282; 281', 282') über Zahnräder mit den Hohlwellen (283, 284) verbunden sind,
wobei die Vielzahl von Hohlwellen (283, 284) umfasst
eine erste Hohlwelle (283) mit Außenzähnen (283a) an ihrem Außenumfang, und
eine außerhalb der ersten Hohlwelle (283) angeordnete zweite Hohlwelle (284) mit Innenzähnen (284a) an ihrem Innenumfang,
wobei die Vielzahl von Antriebseinheiten (281, 282; 281', 282') umfasst eine erste Antriebseinheit (281; 281'), von der die Abtriebswelle (O1) ein Zahnrad im Eingriff mit den Außenzähnen (283a) aufweist, und
eine zweite Antriebseinheit (282), von der die Abtriebswelle (O2) ein Zahnrad im Eingriff mit den Innenzähnen (284a) aufweist,
wobei wenigstens eine der Antriebseinheiten (281', 282') umfasst:
eine Vielzahl von Motoren (M1, M2); und
eine Kraftkopplungseinheit (Pc) zum Koppeln von Kräften von der Vielzahl von Motoren (M1, M2), um der Abtriebswelle (O1, 02) das Abgeben der gekoppelten Kräfte zu ermöglichen, und
wobei die Vielzahl von Motoren (M1, M2) entlang der Umfangsrichtung der Hohlwellen (283, 284) angeordnet ist.

2. Antriebsvorrichtung (28; 28') nach Anspruch 1, wobei
die Kraftkopplungseinheit (Pc) aus einer Kombination von Scheiben und einem Riemen besteht.

3. Roboter (1) umfassend
einen Antriebskörper (24) umfassend die Antriebsvorrichtung (28; 28') nach Anspruch 1 oder 2, wobei die Antriebsvorrichtung (28; 28') einen angetriebenen Körper (25, 26) antreibt.

4. Roboterarmstruktur umfassend
die Antriebsvorrichtung (28; 28') nach Anspruch 1 oder 2.

## Revendications

1. Dispositif d'entraînement (28, 28') comprenant :
une pluralité d'arbres creux (283, 284) disposés de façon concentrique, et
une pluralité d'unités d'entraînement (281, 282 ; 281', 282') disposées le long de la direction circonférentielle des arbres creux (283, 284),
dans lequel les arbres de sortie (O1, O2) des unités d'entraînement (281, 282 ; 281', 282') sont raccordés aux arbres creux (283, 284) par l'intermédiaire de pignons,
dans lequel la pluralité d'arbres creux (283, 284) inclut :
un premier arbre creux (283) présentant des dents externes (283a) au niveau de sa circonférence externe, et
un second arbre creux (284) disposé à l'extérieur du premier arbre creux (283) et comportant des dents internes (284a) au niveau de sa circonférence interne,
dans lequel la pluralité d'unités d'entraînement (281, 282 ; 281', 282') inclut :
une première unité d'entraînement (281 ; 281') dont l'arbre de sortie (O1) comporte un pignon en prise avec les dents externes (283a), et
une seconde unité d'entraînement (282) dont l'arbre de sortie (O2) comporte un pignon en prise avec les dents internes (284a),
dans lequel au moins l'une des unités d'entraînement (281', 282') inclut :
une pluralité de moteurs (M1, M2), et
une unité de couplage de puissance (Pc) couplant les puissances issues de la pluralité de moteurs (M1, M2) afin de permettre à l'arbre de sortie (O1, O2) de délivrer les puissances couplées, et
dans lequel les différents moteurs (M1, M2) sont disposés le long de la direction circonférentielle des arbres creux (283, 284).

2. Dispositif d'entraînement (28; 28') selon la revendication 1, dans lequel
l'unité de couplage de puissance (Pc) est composée d'une combinaison de poulies et d'une courroie.

3. Robot (1) comprenant :
un corps d'entraînement (24) incluant le dispositif d'entraînement (28 ; 28') conforme à la revendication 1 ou à la revendication 2, dans lequel le dispositif d'entraînement (28 ; 28') entraîne un corps entraîné (25, 26) .

4. Structure de bras de robot comprenant :
le dispositif d'entraînement (28 ; 28') conforme à la revendication 1 ou à la revendication 2.
